# FASCICULE DE BREVET EUROPEEN

(11) **EP 3 356 174 B1**
(45) Date de publication et mention de la délivrance du brevet: **09.10.2019**
(21) Numéro de dépôt: 16784948.8
(22) Date de dépôt: 30.08.2016
(51) Int. Cl.: B60K 25/02, B60W 10/06, B60W 10/30, B60W 30/188

(54) **PROCÉDÉ DE COMMANDE D'UNE TRANSMISSION NOTAMMENT DE VÉHICULE AUTOMOBILE**
VERFAHREN ZUR STEUERUNG EINES GETRIEBES INSBESONDERE VON EINEM KRAFTFAHRZEUG
METHOD FOR CONTROLLING A TRANSMISSION IN PARTICULAR OF A MOTOR VEHICLE

(30) Priorité: 30.09.2015 FR 1559223
(43) Date de publication de la demande: 08.08.2018
(73) Titulaire: PSA AUTOMOBILES S.A., 78300 Poissy (FR)
(72) Inventeur: BEAUVILLAIN, Alexis, 91300 Massy (FR)
(86) Numéro de dépôt international: PCT/FR2016/052142
(87) Numéro de publication internationale: WO 2017/055696

(56) Documents cités:
- EP-A2- 0 299 807
- FR-A1- 3 014 802
- US-A1- 2009 260 903

## Description

La présente invention porte sur un procédé de commande d'une transmission, notamment de véhicule automobile.

On connait des véhicules comportant un moteur thermique entraînant des roues par une chaîne de transmission comportant une boîte de vitesses à commande manuelle ou de type pilotée, telle qu'une boîte de vitesses automatique (BVA), une boîte de vitesses mécanique pilotée (BVMP), ou une transmission à variation continue (CVT) En particulier le document FR 3 014 802 A1 décrit un procédé de gestion d'un véhicule automobile comportant au moins un moteur d'entraînement ayant un arbre de sortie accouplé à, et mettant en mouvement, la chaîne cinématique de traction du véhicule, ledit procédé comprend une étape de passage d'une première configuration où au moins un accessoire distinct de la chaîne cinématique de traction est accouplé à, et entraîné par, ledit arbre de sortie, à une deuxième configuration temporaire où ledit au moins un accessoire est déconnecté dudit arbre de sortie, mise en oeuvre durant une phase d'augmentation du couple délivré en sortie par ledit au moins un moteur d'entraînement.

Quel que soit le type de boîte de vitesses utilisé, lorsque le véhicule fonctionne dans des situations de vie à forte contrainte environnementale, comme par exemple sous de fortes chaleurs ou en haute altitude, dans lesquelles la quantité d'oxygène dans l'air s'appauvrit, le moteur thermique ne permet plus de fournir le couple demandé par le conducteur dans les plages de faible régime, en sorte que le véhicule perd de son dynamisme.

L'invention vise à remédier efficacement à cet inconvénient en proposant un procédé de commande d'une transmission notamment de véhicule automobile comportant:
- un moteur thermique entraînant des roues dudit véhicule par une chaîne de transmission, et
- au moins un accessoire prélevant un couple audit moteur thermique,
tel qu'en cas de situation de vie à forte contrainte environnementale, ledit procédé comporte:
- une étape de délestage d'au moins une partie d'un couple prélevé par ledit au moins un accessoire, suivie
- d'une étape de compensation d'une perte de puissance subie par ledit accessoire lors de ladite étape de délestage par augmentation de la puissance consommée par ledit accessoire.

L'invention permet ainsi de conférer du dynamisme au véhicule dans des situations de vie de véhicule à forte contrainte environnementale, tout en fournissant une puissance importante aux accessoires de manière à compenser l'impact négatif des délestages en couple sur les régimes faibles sans augmenter la consommation en carburant. Autrement dit, l'invention permet ainsi d'obtenir le couple voulu par le conducteur en cas de fortes contraintes environnementales avec le moins de gêne perçue possible par le conducteur sur les autres fonctionnalités du véhicule obtenues avec les accessoires.

On comprend par « faible » régime un régime inférieur ou égal à 2500 tours/minutes, notamment inférieur ou égal à 2000 tours/minutes, avec par exemple une valeur vers 1600 tours/minute.

Selon une mise en oeuvre, l'étape de délestage est mise en oeuvre dans une plage de faible régime lorsqu'un couple demandé par un conducteur est supérieur à un couple disponible pour assurer une traction dudit véhicule automobile.

Selon une mise en oeuvre, l'étape de délestage consiste à délester un couple prélevé par un compresseur de climatisation et/ou un alternateur ou un alterno-démarreur. La mise en oeuvre préférée est avec un alternateur ou un compresseur de climatisation.

Selon une mise en oeuvre, dans le cas où ledit accessoire est un alternateur ou un alterno-démarreur, ladite étape de compensation de la perte de puissance est obtenue par une augmentation d'une tension de régulation par rapport à une tension de référence.

Selon une mise en oeuvre, dans le cas où ledit accessoire est un compresseur de climatisation, ladite étape de compensation de la perte de puissance est obtenue par une augmentation d'une cylindrée dudit compresseur par rapport à une cylindrée de référence.

Selon une mise en oeuvre, ladite étape de compensation de la perte de puissance est réalisée durant au moins une partie d'une période séparant deux étapes de délestage.

Selon une mise en oeuvre, une durée de ladite étape de compensation de la perte de puissance est plus longue que celle de ladite étape de délestage de couple dudit au moins un accessoire.

Selon une mise en oeuvre, la situation de vie à forte contrainte environnementale est définie par au moins une situation de vie parmi: une situation de roulage à haute altitude, une situation de roulage par très faible ou très forte température, une situation de roulage avec une batterie déchargée, une situation de roulage avec une climatisation réglée au maximum, ou un appel de courant important par des auxiliaires électriques.

Selon une mise en oeuvre, une situation de vie à forte contrainte environnementale est définie notamment par rapport à un seuil de l'ordre de 35°C pour les situation de roulage à très forte température, ou un seuil de l'ordre de -10°C pour les situations de roulage à très faible température, ou un seuil de l'ordre de 80kPa pour les situations de roulage à haute altitude.

L'invention sera mieux comprise à la lecture de la description qui suit et à l'examen des figures qui l'accompagnent. Ces figures ne sont données qu'à titre illustratif mais nullement limitatif de l'invention.
La figure 1 est une représentation schématique fonctionnelle d'un véhicule automobile à chaîne de transmission pilotée mettant en oeuvre le procédé de commande selon la présente invention;
La figure 2 est un graphique représentant le couple fourni par le moteur et les couples prélevés par les différents éléments accouplés au moteur thermique en fonction du régime du moteur thermique pour des températures ambiantes de fonctionnement de l'ordre de 20°C et de 55°C;
La figure 3 est un graphique représentant le couple fourni par le moteur et les couples prélevés par les différents éléments accouplés au moteur en fonction du régime du moteur thermique pour un véhicule mettant en oeuvre le procédé selon la présente invention;
La figure 4 représente un enregistrement montrant l'évolution du niveau de charge de la batterie Soc en fonction de la vitesse du véhicule Vveh et du régime moteur Wm, lors d'une succession d'étapes de délestage Act et de compensation suivant la mise en oeuvre du procédé selon l'invention.

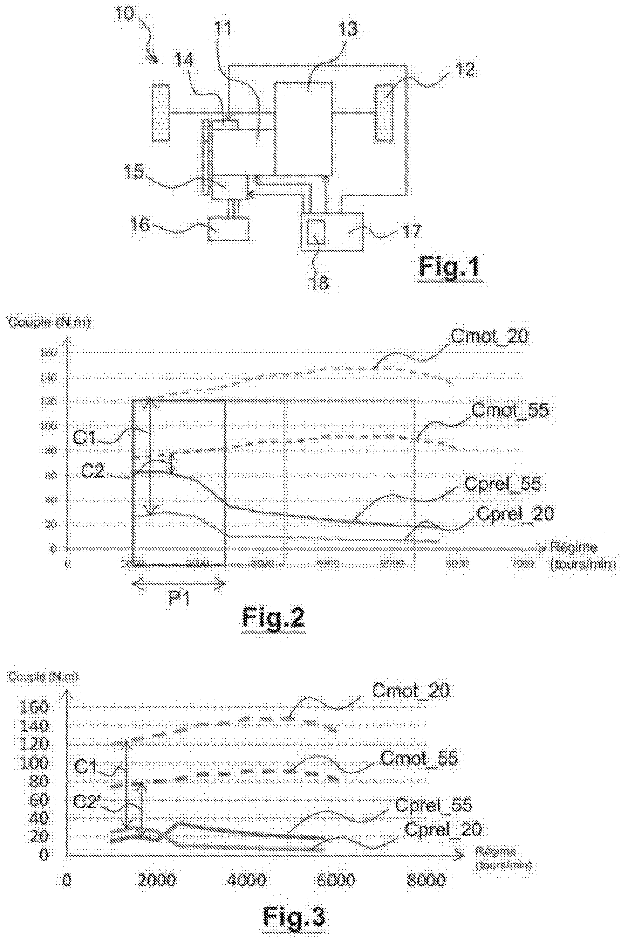

La figure 1 est une représentation schématique fonctionnelle d'un véhicule automobile 10 comportant un moteur thermique 11 entraînant des roues 12 par l'intermédiaire d'une chaîne de transmission 13 par exemple de type pilotée.

Dans la présente description, l'expression chaîne de transmission pilotée 13 correspond à tout système de transmission dans lequel les changements de rapport ou de démultiplication sont décidés par un calculateur et réalisés automatiquement sans intervention du conducteur grâce à des actionneurs suivant des lois de changement de rapport de vitesses. A titre d'exemple classique de chaîne de transmission pilotée 13, on peut citer une boîte de vitesses automatique (BVA) qui comprend un convertisseur de couple hydraulique et des trains épicycloïdaux bloqués par des freins hydrauliques pour réaliser les différentes démultiplications, une boîte de vitesses mécanique pilotée (BVMP) qui comprend un embrayage classique mais piloté, ainsi qu'une boîte de vitesses mécanique classique mais dont les fourchettes sont actionnées électriquement ou hydrauliquement, un variateur qui comprend un embrayage humide ou une transmission à variation continue (CVT) comportant un jeu de poulies à diamètres variables reliées par une chaîne permettant d'obtenir une infinité de valeurs de démultiplication. Dans le cas présent, on utilise de préférence une boîte de vitesses automatique (BVA). L'invention pourra également être mise en oeuvre avec une boîte de vitesses à commande manuelle.

En outre, le moteur 11 coopère, par l'intermédiaire d'un système à courroie installé en façade accessoire, avec des accessoires, en l'occurrence constitués par un compresseur de climatisation 14, un alternateur 15 ou un alterno-démarreur en relation avec une batterie 16. L'alterno-démarreur consiste en une machine électrique tournante réversible pouvant fonctionner en mode générateur pour générer de la puissance électrique, ou en mode moteur pour assurer un démarrage ou un redémarrage du moteur thermique 11. L'alterno-démarreur peut également fonctionner en mode moteur pour fournir le cas échéant une puissance supplémentaire au moteur thermique 11.

Les différents éléments de l'architecture sont contrôlés par un superviseur 17 comportant une mémoire 18 stockant des instructions logicielles pour la mise en oeuvre du procédé selon la présente invention décrit plus en détails ci-après.

Comme cela est visible sur la figure 2, le couple C1 disponible pour la traction à une température ambiante de l'ordre de 20°C correspond à l'écart entre la courbe Cmot_20 représentant le couple produit par le moteur 11 à une température de l'ordre de 20°C et la courbe Cprel_20 correspondant au prélèvement total de couple au moteur 11 (par les accessoires ainsi qu'à cause des pertes de la boîte de vitesses automatique).

Par ailleurs, le couple C2 disponible pour la traction à une température ambiante de l'ordre de 55°C correspond à l'écart entre la courbe Cmot_55 représentant le couple produit par le moteur 11 à une température de l'ordre de 55°C et la courbe Cprel_55 correspondant au prélèvement total de couple au moteur 11 à une température de l'ordre de 55°C.

La différence entre les couples disponibles C1 et C2 est particulièrement importante dans une plage P1 de faible régime comprise entre 1000 et 2500 tours/min.

En conséquence, lorsque le moteur thermique 11 fonctionne dans cette plage de régime P1 pour une température ambiante élevée et que le couple demandé par le conducteur est supérieur au couple disponible C2 pour la traction du véhicule 10, le superviseur 17 commande le délestage d'au moins une partie d'un couple prélevé par au moins un accessoire 14, 15. Le délestage est réalisé en fonction du couple demandé. Ainsi, il sera possible de délester uniquement le couple pour une partie des accessoires si cela suffit à atteindre le couple demandé, ou pour l'ensemble des accessoires afin d'obtenir le maximum de couple de traction possible.

Comme cela est visible sur la figure 3, le délestage simultané et complet de l'alternateur 15 et du compresseur de climatisation 14 permet d'obtenir un couple disponible C2' trois fois supérieur au couple obtenu sans délestage (60N.m pour C2' contre 20N.m pour C2) dans la plage P1 comprise entre 1000 et 2500 tours/min. L'invention permet ainsi de conférer du dynamisme au véhicule 10 dans les plages de faible régime.

Afin de compenser la perte de puissance subie par le ou les accessoires 14, 15 lors de l'étape de délestage, le procédé comprend ensuite une étape de compensation en augmentant la puissance consommée par le ou les accessoires 14, 15 ayant subi la perte de puissance. Ainsi, la puissance consommée par l'accessoire 14, 15 est modulée en fonction de la situation de vie du véhicule 10.

En l'occurrence, dans le cas de l'alternateur 15, l'augmentation de la puissance consommée est obtenue en augmentant la tension de régulation par rapport à une tension de référence. Par exemple, pour une tension de référence de l'ordre de 13,5V, la tension de régulation est augmentée lors de la phase de compensation pour atteindre une tension comprise entre 14,5V et 15V, voire plus. En outre, la durée de la phase de compensation de puissance est plus longue que la durée d'un délestage.

Dans un exemple de mise en oeuvre, un délestage durant deux secondes pour un alternateur 15 produisant 2000 Watts engendre un déficit de 4000J qu'il est nécessaire de compenser sur la durée de temps séparant deux délestages. Sur les cycles sévères en termes de brio, ce temps est de l'ordre de dix secondes. Il convient donc de compenser ces 4000J manquants sur les dix secondes (soit 400J/seconde à compenser), ce qui correspond à un surcroit de puissance nécessaire de 400W par seconde pour un véhicule 10 où l'alternateur 15 alimente le réseau de bord en fournissant une puissance de 2000W.

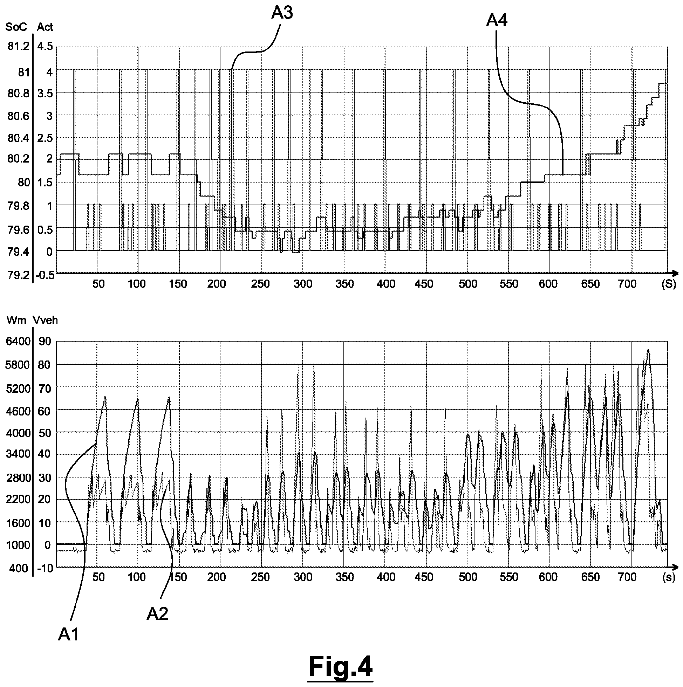

Les enregistrements de la figure 4 montrent que lorsque la vitesse du véhicule A1 et que le régime moteur A2 augmentent, le délestage (représenté par les pics de la courbe A3) réalisé provoque une baisse du niveau de charge de la batterie A4 qui est rapidement compensée par l'augmentation de la puissance fournie par l'alternateur 15 entre deux délestages ou deux accélérations. Dès que la sollicitation des délestages diminue le niveau de charge remonte en sorte qu'une puissance de 2000Watts de l'alternateur 15 suffit à stabiliser le niveau de charge de la batterie 16. En outre, on observe que le procédé selon l'invention permet de recharger la batterie 16 entre le début et la fin de l'essai malgré les délestages répétés.

Bien entendu, l'invention pourra également être mise en oeuvre en agissant sur un accessoire autre que l'alternateur 15, tel qu'un compresseur de climatisation 14, ou sur les deux accessoires simultanément. Par exemple, il sera possible de faire varier la cylindrée du compresseur 14, c'est-à-dire de la diminuer lors de l'étape de délestage puis de l'augmenter ensuite, le cas échéant jusqu'à sa cylindrée maximale, lors de l'étape de compensation de la perte de puissance.

Le superviseur 17 permet ainsi de piloter les changements de puissance électrique et frigorifique afin de compenser les délestages préalables.

La mise en oeuvre de l'invention a été décrite pour une situation de roulage à forte contrainte environnementale constituée par un roulage à température extérieure élevée. De manière plus générique, la situation de vie à forte contrainte environnementale pourra être définie pour une situation de roulage en haute altitude, par très faible ou très forte température, avec une batterie 16 déchargée, avec une climatisation réglée au maximum, ou pour un appel de courant important par des auxiliaires électriques de forte puissance, tels qu'un groupe moto-ventilateur, un pare-brise chauffant, ou un volant chauffant par exemple.

Chaque situation de vie est définie par rapport à un seuil. La situation de vie est considérée comme normale tant que la grandeur physique correspondante (température, altitude, niveau de réglage de la climatisation, niveau de courant) ne dépasse pas le seuil. La situation de vie est considérée comme une situation de vie à forte contrainte environnementale lorsque la grandeur physique dépasse le seuil considéré.

On pourra notamment retenir un seuil par exemple de l'ordre de 35°C pour les roulages à haute température, un seuil par exemple de l'ordre de -10°C pour les roulages à basse température, ou un seuil de pression atmosphérique de l'ordre de 80kPa pour les roulages à haute altitude.

## Revendications

1. Procédé de commande d'une transmission notamment de véhicule automobile (10) comportant:
- un moteur thermique (11) entraînant des roues (12) dudit véhicule (10) par une chaîne de transmission (13), et
- au moins un accessoire (14, 15) prélevant un couple audit moteur thermique (11), en cas de situation de vie à forte contrainte environnementale, ladite situation de vie à forte contrainte environnementale étant définie par au moins une situation de vie parmi : une situation de roulage à haute altitude, une situation de roulage par très faible ou très forte température, une situation de roulage avec une batterie (16) déchargée, une situation de roulage avec une climatisation réglée au maximum, ou un appel de courant important par des auxiliaires électriques, ledit procédé comporte:
- une étape de délestage d'au moins une partie d'un couple prélevé par ledit au moins un accessoire (14, 15), **caractérisé en ce que** cette étape de délestage est suivie :
- d'une étape de compensation d'une perte de puissance subie par ledit accessoire (14, 15) lors de ladite étape de délestage par augmentation de la puissance consommée par ledit accessoire (14, 15).

2. Procédé selon la revendication 1, **caractérisé en ce que** l'étape de délestage est mise en oeuvre dans une plage de faible régime (P1) correspondant à un régime de rotation du moteur compris entre 1000 et 2500 tours/min, lorsqu'un couple demandé par un conducteur est supérieur à un couple disponible pour assurer une traction dudit véhicule automobile (10).

3. Procédé selon la revendication 1 ou 2, **caractérisé en ce que** l'étape de délestage consiste à délester un couple prélevé par un compresseur de climatisation (14) et/ou un alternateur (15) ou un alterno-démarreur, de préférence par un alternateur.

4. Procédé selon la revendication 3, **caractérisé en ce que**, dans le cas où ledit accessoire est un alternateur (15) ou un alterno-démarreur, ladite étape de compensation de la perte de puissance est obtenue par une augmentation d'une tension de régulation par rapport à une tension de référence.

5. Procédé selon la revendication 3, **caractérisé en ce que**, dans le cas où ledit accessoire est un compresseur de climatisation (14), ladite étape de compensation de la perte de puissance est obtenue par une augmentation d'une cylindrée dudit compresseur de climatisation (14) par rapport à une cylindrée de référence.

6. Procédé selon l'une quelconque des revendications 1 à 5, **caractérisé en ce que** ladite étape de compensation de la perte de puissance est réalisée durant au moins une partie d'une période séparant deux étapes de délestage.

7. Procédé selon l'une quelconque des revendications 1 à 6, **caractérisé en ce qu'**une durée de ladite étape de compensation de la perte de puissance est plus longue que celle de ladite étape de délestage de couple dudit au moins un accessoire (14, 15).

8. Procédé selon l'une quelconque des revendications précédentes, **caractérisé en ce qu'**une situation de vie à forte contrainte environnementale est définie notamment par rapport à un seuil de l'ordre de 35°C pour les situation de roulage à très forte température, ou un seuil de l'ordre de -10°C pour les situations de roulage à très faible température, ou un seuil de l'ordre de 80kPa pour les situations de roulage à haute altitude.

## Patentansprüche

1. Verfahren zur Steuerung eines Getriebes, insbesondere eines Kraftfahrzeugs (10), das Folgendes umfasst:
- eine Brennkraftmaschine (11), die Räder (12) des Fahrzeugs (10) durch einen Kraftübertragungsstrang (13) antreibt, und
- mindestens ein Zubehörteil (14, 15), das an der Brennkraftmaschine (11) ein Drehmoment in dem Fall einer Lebenssituation mit starken Umweltbelangen entnimmt, wobei die Lebenssituation mit starken Umweltbelangen durch mindestens eine Lebenssituation aus den folgenden definiert ist: eine Fahrsituation in hoher Seehöhe, eine Fahrsituation bei sehr niedriger oder sehr hoher Temperatur, eine Fahrsituation mit einer entladenen Batterie (16), eine Fahrsituation mit einer auf das Maximum eingestellten Klimaanlage, oder einem hohen Abrufstrom durch elektrische Hilfsgeräte, wobei das Verfahren Folgendes umfasst:
- einen Schritt des Abwerfens mindestens eines Teils des von dem mindestens einen Zubehörteil (14, 15) entnommenen Drehmoments, **dadurch gekennzeichnet, dass** auf diesen Abwurfschritt Folgendes folgt:
- ein Schritt des Kompensierens eines Leistungsverlusts, den das Zubehörteil (14, 15) bei dem Abwurfschritt erfährt, durch Steigern der von dem Zubehörteil (14, 15) verbrauchten Leistung.

2. Verfahren nach Anspruch 1, **dadurch gekennzeichnet, dass** der Abwurfschritt in einem Bereich mit niedriger Drehzahl (P1) umgesetzt wird, der einer Drehzahl des Motors zwischen 1000 und 2500 Umdrehungen/Minute entspricht, wenn ein von einem Fahrer gefordertes Drehmoment größer ist als ein Drehmoment, das verfügbar ist, um eine Zugkraft des Kraftfahrzeugs (10) sicherzustellen.

3. Verfahren nach Anspruch 1 oder 2, **dadurch gekennzeichnet, dass** der Abwurfschritt darin besteht, ein Drehmoment abzuwerfen, das von einem Klimaanlagenverdichter (14) und/oder einem Wechselstromgenerator (15) oder einem Anlassergenerator, bevorzugt von einem Wechselstromgenerator, entnommen wird.

4. Verfahren nach Anspruch 3, **dadurch gekennzeichnet, dass** in dem Fall, in dem das Zubehörteil ein Wechselstromgenerator (15) oder ein Anlassergenerator ist, der Kompensationsschritt des Leistungsverlusts durch eine Steigerung einer Regelungsspannung im Vergleich zu einer Referenzspannung erhalten wird.

5. Verfahren nach Anspruch 3, **dadurch gekennzeichnet, dass** in dem Fall, in dem das Zubehörteil ein Klimaanlagenverdichter (14) ist, der Kompensationsschritt des Lastverlusts durch eine Steigerung eines Hubraums des Klimaanlagenverdichters (14) im Vergleich zu einem Referenzhubraum erhalten wird.

6. Verfahren nach einem der Ansprüche 1 bis 5, **dadurch gekennzeichnet, dass** der Kompensationsschritt des Lastverlusts während mindestens eines Teils einer Periode, die zwei Abwurfschritte trennt, ausgeführt wird.

7. Verfahren nach einem der Ansprüche 1 bis 6, **dadurch gekennzeichnet, dass** eine Dauer des Kompensationsschritts des Leistungsverlusts länger ist als die des Drehmomentabwurfschritts des mindestens einen Zubehörteils (14, 15).

8. Verfahren nach einem der vorstehenden Ansprüche, **dadurch gekennzeichnet, dass** eine Lebenssituation mit starken Umweltbelangen insbesondere im Vergleich zu einem Schwellenwert in der Größenordnung von 35 °C für die Fahrsituationen mit sehr hoher Temperatur oder einem Schwellenwert in der Größenordnung von -10 °C für die Fahrsituationen mit sehr niedriger Temperatur oder einem Schwellenwert in der Größenordnung von 80 kPa für die Fahrsituationen in hoher Seehöhe definiert ist.

## Claims

1. A method for controlling a transmission, in particular of a motor vehicle (10), comprising:
- a heat engine (11) driving wheels (12) of said vehicle (10) via a drive chain (13), and
- at least one accessory (14, 15) taking a torque from said heat engine (11), in the case of a life situation with strong environmental constraints, said life situation with strong environmental constraints being defined by at least one life situation from: a situation of running at high altitude, a situation of running at very low or very high temperature, a situation of running with a discharged battery (16), a situation of running with an air-conditioning adjusted to the maximum, or a high current draw by electrical auxiliaries, said method comprises:
- a step of offloading at least a part of the torque taken by said at least one accessory (14, 15), **characterized in that** this offloading step is followed:
- by a step of compensating a loss of power suffered by said accessory (14, 15) during the offloading step by an increase of the power consumed by the said accessory (14, 15).

2. The method according to claim 1, **characterized in that** the step of offloading is implemented in a low speed range (P1) corresponding to a rotation speed of the engine comprised between 1000 and 2500 revolutions/min, when a torque required by a driver is greater than an available torque to ensure a traction of the said motor vehicle (10).

3. The method according to claim 1 or 2, **characterized in that** the step of offloading consists in offloading a torque taken by an air-conditioning compressor (14) and/or an alternator (15) or an alternator-starter, preferably by an alternator.

4. The method according to claim 3, **characterized in that**, in the case where the said accessory is an alternator (15) or an alternator-starter, said step of compensating the loss of power is obtained by an increase of a regulation voltage with respect to a reference voltage.

5. The method according to claim 3, **characterized in that**, in the case where said accessory is an air-conditioning compressor (14), said step of compensating the loss of power is obtained by an increase of a capacity of the said air-conditioning compressor (14) with respect to a reference capacity.

6. The method according to any one of claims 1 to 5, **characterized in that** the said step of compensating the loss of power is realized during at least a portion of a period separating two offloading steps.

7. The method according to any one of claims 1 to 6, **characterized in that** a duration of the said step of compensating the loss of power is longer than that of the said offloading step of torque of the said at least one accessory (14, 15).

8. The method according to any one of the preceding claims, **characterized in that** a life situation with strong environmental constraints is defined in particular with respect to a threshold in the order of 35 °C for the running situations at very high temperature, or a threshold in the order of -10 °C for the running situations at very low temperature, or a threshold in the order of 80kPa for the running situations at high altitude.
